# EUROPÄISCHE PATENTSCHRIFT

(11) **EP 3 139 096 B1**
(45) Veröffentlichungstag und Bekanntmachung des Hinweises auf die Patenterteilung: **14.03.2018**
(21) Anmeldenummer: 16167925.3
(22) Anmeldetag: 02.05.2016
(51) Int. Cl.: F24C 15/00, F21W 131/307, F21V 29/15, F21Y 115/10

(54) **BACKOFENLEUCHTE**
BAKING OVEN LIGHT
ÉCLAIRAGE DE FOUR

(30) Priorität: 27.08.2015 DE 102015114253
(43) Veröffentlichungstag der Anmeldung: 08.03.2017
(73) Patentinhaber: BJB GmbH & Co. KG, 59755 Arnsberg (DE)
(72) Erfinder: Baumeister, Olaf, 59846 Sundern (DE); Scholz, Detlef, 59594 Soest (DE)
(74) Vertreter: Ostriga Sonnet Wirths & Vorwerk

(56) Entgegenhaltungen:
- EP-A2- 2 251 588
- DE-A1- 3 742 509
- DE-B- 1 194 343
- US-A1- 2016 320 069

## Beschreibung

Die Erfindung betrifft eine Backofenleuchte, mit einer Befestigungshülse, die in einer Ausnehmung einer Garraumwandung verankerbar ist, mit einer lichtdurchlässigen Abdeckung, welche die Ausnehmung der Garraumwandung verschließt, mit einem Leuchtmittel, welches hinter der lichtdurchlässigen Abdeckung angeordnet ist und dessen emittiertes Licht der Ausleuchtung des Garraumes dient, wobei das Leuchtmittel von wenigstens einer LED gebildet ist, die das Licht in Form eines Lichtkegels emittiert, wobei die LED auf einem Kühlkörper angeordnet ist, der der Abfuhr der Betriebswärme der LED dient, wobei eine Wärmebarriere zwischen der Abdeckung und der LED angeordnet ist, die die LED vor einer Gartemperatur schützt, wobei der Lichtkegel die Anordnungsebene der Wärmebarriere durchstößt. Backofenleuchten sind aus dem Stand der Technik in vielerlei Ausgestaltung bekannt. Wenn LEDs als Leuchtmittel genutzt werden, besteht ein besonderes Augenmerk im Stand der Technik darauf, die aus dem Backofen-Garraum ausgestrahlte Hitze im Bereich des LED-Leuchtmittels entweder effektiv abzuführen oder die LED durch geeignete Wärmebarrieren vor der Wärme des Garraumes zu schützen.

DE 10 2005 044 347 A1 offenbart beispielsweise die Möglichkeit, den Zwischenraum zwischen Leuchtmittel und Garraum durch ein Silica-Aerogel zu füllen, welches mit der Isolierung gegen die Wärmestrahlung des Garraumes dient. Die DE 10 2009 02 775 A1 schlägt vor, ein zylinderartiges Element zwischen Garraum und LED zu setzen, welches lichtdurchlässig ausgestaltet ist und die LED vor der Wärmestrahlung schützt. Darüber hinaus offenbart diese Druckschrift auch ein Belüftungskonzept zur effektiven Wärmeabfuhr. EP 2 233 839 A1 zeigt beispielsweise, dass ein gasgefüllter Zylinder nutzbar ist, um die LED gegenüber dem Garraum zu beabstanden und dennoch ausreichend Licht in den Garraum zu führen. Die DE 37 42 509 A1 schlägt bei einer herkömmlichen Glühlampe für Backöfen vor, deren ofenseitige Fassung mit einem Wärmeschild abzudecken ist., Der Wärmeschild weist eine Öffnung lediglich für den Lampensockel auf und minimiert so die Temperatureinwirkung auf die Lampenfassung.

Es hat sich herausgestellt, dass die aus dem Stand der Technik bekannten Isolationsmittel zum Schutz der LED vor der Wärme des Garraumes sich nachteilig auf die Lichtausbeute auswirken und darüber hinaus das Richten des Lichtes zu einer optimalen Ausleuchtung des Garraumes stark erschweren.

Aufgabe der Erfindung ist es deshalb, eine Backofenleuchte zu schaffen, deren Wärmebarriere zum Schutz der LED die Lichtemission möglichst unbeeinflusst lässt.

Gelöst wird die Aufgabe von einer Backofenleuchte mit den Merkmalen des Anspruches 1, insbesondere mit den kennzeichnenden Merkmalen, wonach die Wärmebarriere zumindest einen Hitzeschild mit einer Öffnung aufweist, durch welche das Licht der LED in Richtung Abdeckung gelangt, die Wärmebarriere mehrere, scheibenartige Hitzeschilde umfasst, die zwischen LED und Abdeckung angeordnet sind und einen unterschiedlichen Abstand zur LED aufweisen, wobei die Öffnung eines jeden Hitzeschildes in Form und/oder Weite im Wesentlichen der Kontur des Lichtkegels in der jeweiligen Anordnungsebene eines jeden Hitzeschildes entspricht.

Der wesentliche Ansatz der Erfindung ist darin zu sehen, die LED möglichst großflächig gegen Wärmestrahlung abzuschirmen und den Hitzeschild lediglich dort durchlässig zu gestalten, wo das Licht passieren muss. Somit wird anstelle dicker Isolierschichten ein verhältnismäßig dünner, also scheibenartiger Hitzeschild verwendet. Die bevorzugte Ausführungsform sieht vor, dass die Öffnung des Hitzeschildes in Form und/oder Weite im Wesentlichen der Kontur des Lichtkegels in der Anordnungsebene des Hitzeschildes entspricht. Die Erfindung bedient sich also der Tatsache, dass LEDs ein im Wesentlichen gerichtetes Licht emittieren, welches eine geringe Streuung aufweist. Dies ermöglicht es, im Hitzeschild eine Öffnung vorzusehen, die in Durchmesser und Form im Wesentlichen der Kontur des Lichtkegels gleicht. Dabei wird die Öffnung umso kleiner ausfallen, je näher der Hitzeschild an der LED angeordnet ist. Dies ermöglicht es, einen ungehinderten Lichtdurchtritt durch die Wärmebarriere zu gewährleisten und gleichzeitig die vor der Wärmeabstrahlung des Garraumes schützende Fläche des Hitzeschildes zu vergrößern.

Es hat sich herausgestellt, dass eine gestaffelte Anordnung mehrerer Hitzeschilde hintereinander zwischen LED und Abdeckung der Backofenleuchte eine sehr effektive Reduktion der Wärmebelastung gewährleistet. Dabei ist darauf zu achten, dass die den Lichtdurchtritt gewährleistenden Öffnungen der in unterschiedlicher Position zur LED angeordneten Hitzeschilde mit Entfernung zur LED wachsen. Jede Öffnung entspricht im Wesentlichen in Kontur und Durchmesser dem Lichtkegel in der jeweiligen Anordnungsebene, so dass der Lichtdurchtritt nahezu ungehindert erfolgen kann. Wesentlich ist hierbei auch, dass die Öffnungen der Wärmeschilde ungefüllt ausgestaltet sein können, so dass selbst Lichtverluste durch im Strahlengang vorhandene, transluzente Materialien vermieden werden. Dies schließt selbstverständlich nicht aus, dass insbesondere die der LED nahe gelegene Öffnung eines der gestaffelt angeordneten Hitzeschilde mit einer Halterung für einen Reflektor und einer Optik versehen werden kann.

Wenn die Hitzeschilde gestaffelt hintereinander angeordnet sind, sind diese jeweils zueinander durch eine spaltartige Öffnung beabstandet. Es ist vorgesehen, dass die der Wärmeabfuhr dienende, zwischen Garraum und Backofenaußenwand vorhandene Luftzirkulation durch die Spalte zwischen den Hitzeschilden hindurchgeführt ist und die Wärmeabfuhr in diesem Bereich fördert.

Um eine leicht montierbare Einheit zu schaffen, ist es vorgesehen, dass die Hitzeschilde untereinander verbunden sind und die Wärmebarriere an ihrem der Abdeckung abgewandten Ende Haltemittel für den Kühlkörper aufweist.

Wie vorne schon angeklungen, ist vorgesehen, dass eine LED-nahe Öffnung eine Halterung für einen Reflektor und/oder eine Optik bildet.

Ferner ist vorgesehen, dass die Befestigungshülse Haltemittel für die Wärmebarriere aufweist.

Ein besonderes Merkmal der Erfindung besteht außerdem darin, die Hitzeschilde aus Materialien zu erstellen, die eine mittlere bis geringe Wärmeleitfähigkeit aufweisen. Es ist deshalb denkbar, dass jeder Hitzeschild aus einem hoch temperaturbeständigen Kunststoff gebildet ist. Zu solchen hoch temperaturbeständigen Kunststoffen gehören beispielsweise aus der Gruppe der flüssigkristallinen Polymere.

Alternativ ist vorgesehen, dass jeder Hitzeschild aus einem mineralischen Material, insbesondere Glimmer gefertigt ist. Mineralische Materialien sind insbesondere von Vorteil, wenn die zu erwartende Wärmebelastung besonders hoch ist. Dies hat einerseits mit dem Ausdehnungsverhalten zu tun, welches hier gegenüber den vorerwähnten Kunststoffen günstiger ist. Darüber hinaus ist die Temperaturbeständigkeit von mineralischen Materialien bedeutend höher als die von Kunststoffen. Glimmer hat den wesentlichen Vorteil, dass er bereits reflektierende Anteile enthält. So erschwert er nicht nur den Wärmedurchtritt in Richtung LED durch seine geringe Wärmeleitfähigkeit. Er reflektiert darüber hinaus die Wärmestrahlung.

Die Reflektion der Wärmestrahlung wird weiter verbessert, wenn eine der Abdeckung zugewandte Fläche eines Hitzeschildes wärmereflektierend ausgebildet ist.

Schließlich ist es vorgesehen, dass die Abdeckung, die Befestigungshülse, die Wärmebarriere, die LED und der Kühlkörper ein vormontiertes Bauteil bilden.

Um die kontrollierte Streuung des Lichtes zu gewährleisten ist vorgesehen, dass die Befestigungshülse eine lichtreflektierende Innenoberfläche aufweist.

Ein besseres Verständnis der Erfindung sowie weitere Vorteile sind in der nachfolgenden Beschreibung niedergelegt. Es zeigen:
- Figur 1: eine Prinzipskizze zur Darstellung der Wärmebarriere in einer erfindungsgemäßen Backofenleuchte,
- Figur 2: die Explosionsdarstellung der erfindungsgemäßen Backofenleuchte in einer ersten Ausführungsform,
- Figur 3: einen Längsschnitt der Backofenleuchte gemäß Figur 2,
- Figur 4: eine vereinfachte Darstellung der Lichtemission der erfindungsgemäßen Backofenleuchten gemäß Figur 2,
- Figur 5: eine Explosionsansicht einer zweiten Ausführungsform einer erfindungsgemäßen Backofenleuchte,
- Figur 6: die Backofenleuchte gemäß Figur 5 in Längsschnitt.

In den Figuren ist eine Backofenleuchte insgesamt mit der Bezugsziffern 10 versehen.

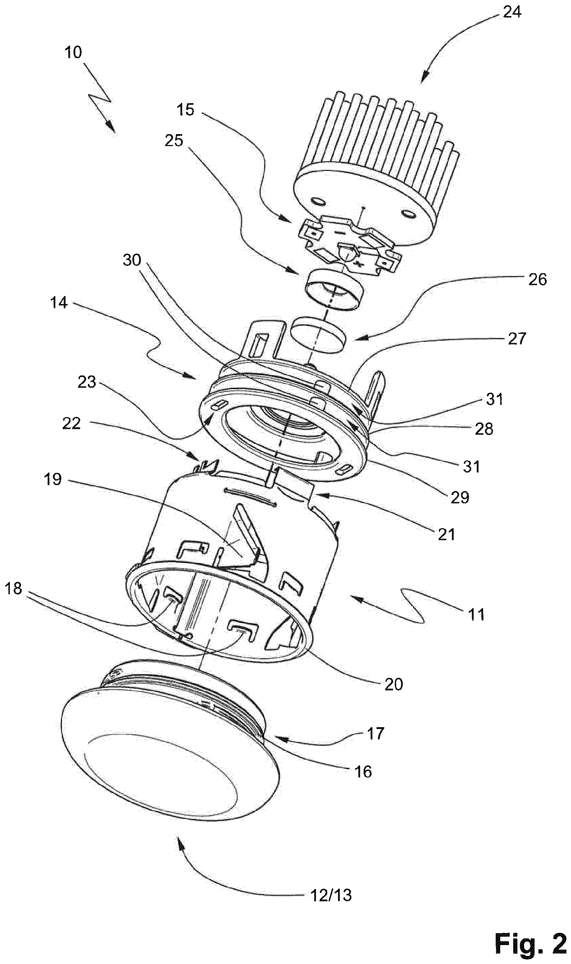

Wie in der Explosionsdarstellung gemäß Figur 2 gezeigt, umfasst die Backofenleuchte 10 eine Befestigungshülse 11 zur Festlegung der Backofenleuchte 10 in der Ausnehmung einer Garraumwand. Die Befestigungshülse 11 trägt an ihrer einer LED 15 abgewandten Seite eine lichtdurchlässige Abdeckung 12 in Form eines Abdeckglases 13. Das Abdeckglas 13 verfügt über einen mit Außengewinde 16 versehenen Schaft 17. Die Befestigungshülse 11 verfügt über in ihren Innenraum gerichtete, Gewindegangabschnitte bildende Vorsprünge 18. Durch das Zusammenwirken des Außengewindes 16 mit den Vorsprüngen 18 ist das Abdeckglas 13 in die Befestigungshülse 11 einschraubbar. Rastflügel 19 der Befestigungshülse 11 sind von einem flanschartigen Kragen 20 in Richtung LED 15 beabstandet. Sie nehmen eine Garraumwand zwischen sich und dem Kragen 20 auf und legen so die Backofenleuchte 10 an der Garraumwand fest.

Die Befestigungshülse 11 verfügt sodann an ihrem der LED 15 zugewandte Enden über erste Haltemittel 21 sowie Positionierungsstifte 22. Die ersten Haltemittel 21 dienen der Festlegung einer Wärmebarriere 14 an der Befestigungshülse 11. Die Wärmebarriere 14 weist den Positionierungsstiften 22 zugeordnete Positionierungsöffnungen 23 auf. Zur Festlegung der Wärmebarriere 14 an der Befestigungshülse 11 greifen die Positionierungsstifte 22 in die Positionierungsöffnungen 23 ein. Die Haltemittel 21 legen die Wärmebarriere 14 an der Befestigungshülse 11 fest.

Die Backofenleuchte 10 umfasst ferner einen Kühlkörper 24, auf welchem die LED 15 mit ihrer Platine angeordnet ist. Der Kühlkörper 24 dient der Abfuhr der Betriebswärme von der LED 15 an die Umgebungsluft. Zur Gewährleistung einer guten Lichtausbeute und zur Beeinflussung des von der LED 15 emittierten Lichtes dient ein Reflektor 25 sowie ein Optikelement 26.

Die Wärmebarriere 14 besteht aus drei, zueinander beabstandet angeordneten Hitzeschilden, die die Bezugszeichen 27 bis 29 tragen. Die Hitzeschilde 27 und 28 sowie 28 und 29 sind scheibenartig ausgebildet und über Abstandselemente 30 aneinander festgelegt, so dass sich zwischen dem ersten Hitzeschild 27 und zweiten Hitzeschild 28 sowie zwischen dem zweiten Hitzeschild 28 und dem dritten Hitzeschild 29 je ein Luftspalt 31 bildet.

Schließlich weist die Wärmebarriere 14 an ihrem der LED 15 zugewandten Ende zweite Haltemittel 32 auf, bei denen es sich beispielsweise um Rastelemente handeln kann. Diese dienen der Festlegung des Kühlkörpers 24 an der Wärmebarriere 14, wobei die LED-Platine zwischen der Wärmebarriere 14 und dem Kühlkörper 24 gehalten ist. Eine separate Befestigung der LED-Platine am Kühlkörper 24 ist somit nicht nötig.

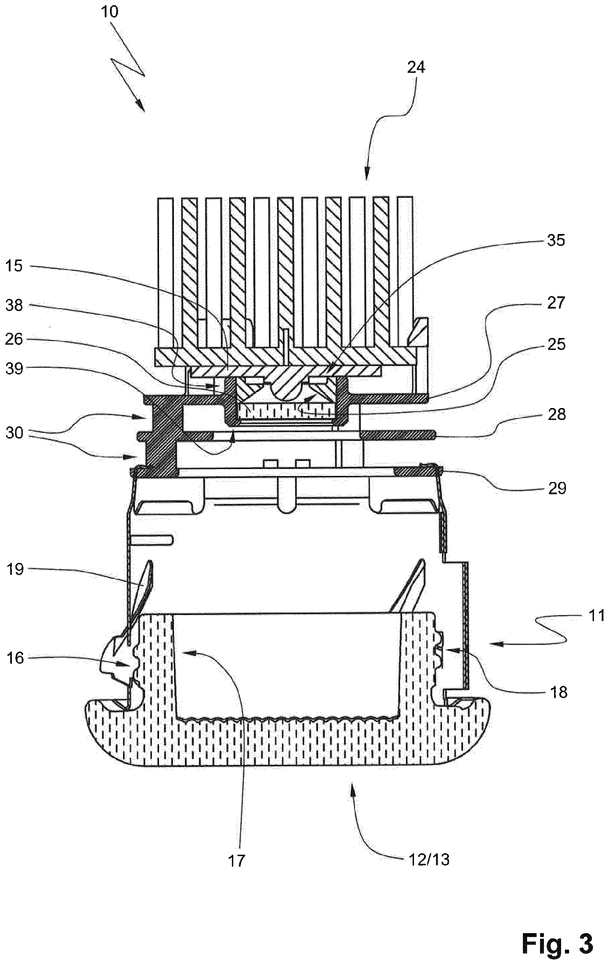

Im ersten Ausführungsbeispiel der Erfindung gemäß der Figuren 2 und 3 ist die Wärmebarriere 14 ein einstückiges Kunststoffspritzgießteil.

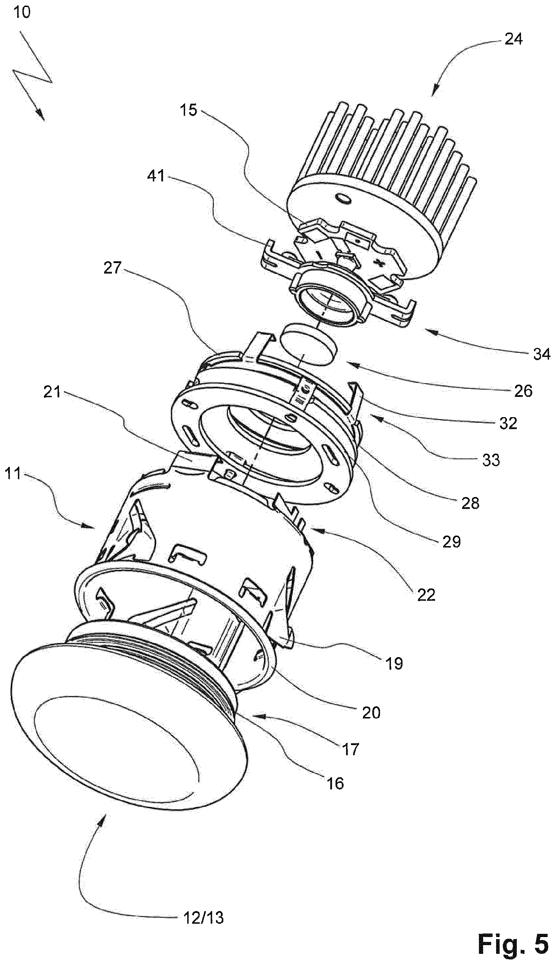

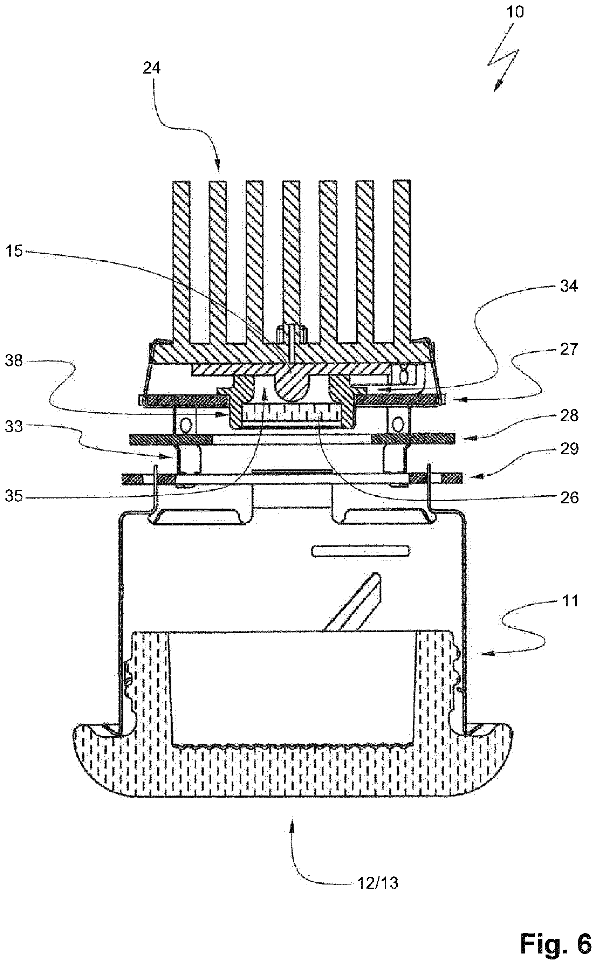

In den Figuren 5 und 6 ist eine zweite Ausführungsform der Erfindung dargestellt. Sie unterscheidet sich im Wesentlichen lediglich in der Ausbildung der Wärmebarriere 14, die hier aus einzelnen, scheibenartigen, mineralischen Hitzeschilden 27 bis 29 besteht. Diese sind mittels einer Halteklammer 33 aneinander festgelegt, die ihrerseits wiederum zweite Haltemittel 32 zur Anordnung des Kühlkörpers an der Wärmebarriere 14 ausbildet. Um den Reflektor 25 und oder das Optikelement 26 im Bereich der LED 15 anordnen zu können, ist bei dieser Ausführungsform ein separater Optikhalter 34 vorgesehen. Bei dieser zweiten Ausführungsform definiert Halteklammer 33 die Lage der sowie die Abstände zwischen den Hitzeschilden 27 bis 29.

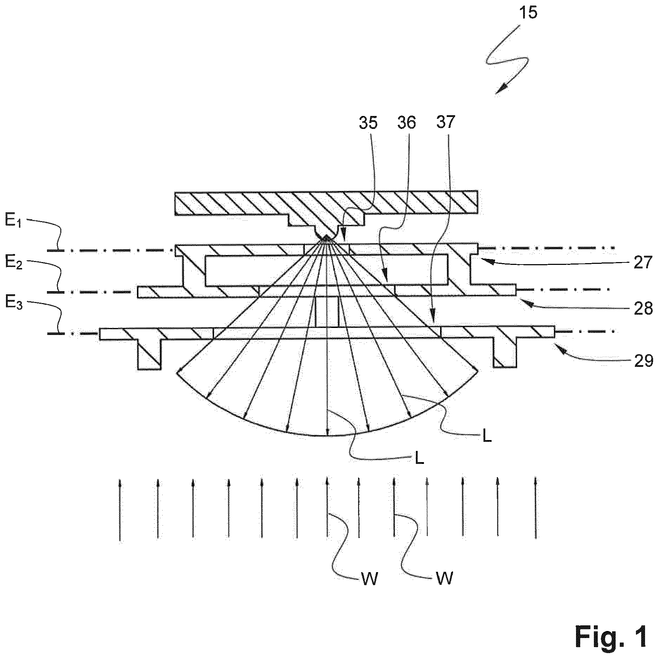

Ein wesentliches Element der erfindungsgemäßen Backofenleuchte 10 ist die neuartige Ausbildung der Wärmebarriere 14. Erläutert wird dieser Teil der Erfindung nunmehr an Hand der Prinzipdarstellung der Figur 1. Figur 1 verzichtet auf eine Reihe von Elementen der Backofenleuchte 10 in der Darstellung, um eine entsprechende Klarheit zu gewährleisten. Dargestellt ist zunächst die LED 15 sowie die Hitzeschilde 27, 28 und 29. Der erste Hitzeschild 27 ist nahe der LED 15 angeordnet, der dritte Hitzeschild 29 ist LED-fern angeordnet. Der zweite Hitzeschild 28 liegt zwischen dem ersten Hitzeschild 27 und dem dritten Hitzeschild 29. Ein wesentliches Merkmal der Hitzeschilde 27, 28, 29 ist ihre scheibenartige Ausbildung. Jeder Hitzeschild 27 bis 29 ist parallel zur LED-Platine angeordnet. Jeder Hitzeschild 27 bis 29 ist aus einem lichtundurchlässigen Material gefertigt und weist je eine Öffnung auf. Die Öffnungen sind mit den Bezugszeichen 35 bis 37 versehen.

LEDs weisen im Wesentlichen ein gerichtetes Licht auf, so dass aus der LED 15 ein kegelartiges Strahlenbündel mit definiertem Öffnungswinkel emittiert wird. Der Lichtkegel K wird in Figur 1 durch exemplarisch dargestellte Lichtstrahlen L definiert. Der Öffnungswinkel des Lichtkegels K beträgt vorliegend in etwa 120 Grad.

Jeder Hitzeschild 27 bis 29 befindet sich in einer Anordnungsebene E1 bis E3 zwischen LED 15 und der hier nicht dargestellten Abdeckung 12. Der Lichtkegel K durchtritt jede dieser Anordnungsebenen E1 bis E3 wobei seine Mantellinien in der jeweiligen Ebene E1 bis E3 Flächen von etwa gleicher Kontur, jedoch unterschiedlicher Größe definieren. Die jeweilige Fläche ist ein Abbild der Lichtkegel-Kontur in der jeweiligen Ebene E1 bis E3.

Um einen ungehinderten Lichtdurchtritt durch die Hitzeschilde 27 bis 29 zu gewährleisten, sind die vorgenannten Öffnungen 35 bis 37 im jeweiligen Hitzeschild 27 bis 29 vorgesehen. Dabei entspricht die Öffnung 35 bis 37 eines jeden Hitzeschildes 27 bis 29 in Form und/oder Weite im Wesentlichen der Kontur des Lichtkegels K in der jeweiligen Anordnungsebene E1 bis E3. Mit anderen Worten ist in den jeweiligen Hitzeschilden 27 bis 29 diejenige Fläche in Form einer Öffnung 35 bis 37 freigeschnitten, die durch diejenigen Mantellinien definiert wird, wie die jeweilige Anordnungsebene E1 bis E3 schneiden.

Mit zunehmender Entfernung des Hitzeschildes 27 bis 29 von der LED 15 werden die jeweiligen Öffnungen 35 bis 37 also größer. Demzufolge handelt es sich bei der Öffnung 35 des ersten Hitzeschildes 27 um die kleinste Öffnung, die Öffnung 36 des zweiten Hitzeschildes 28 ist entsprechend des sich weitenden Lichtkegels größer. Im Ausführungsbeispiel gemäß Figur 1 weist die Öffnung 37 des dritten Hitzeschildes 29 die größte Weite auf.

Wenn die jeweilige Öffnung 35 bis 37 in der jeweiligen Anordnungsebene E1 bis E3 der Kontur des Lichtkegels K in der jeweiligen Anordnungsebene E1 bis E3 entspricht, werden im Optimalfall auch die Randstrahlen des Lichtkegels K frei durch die jeweiligen Öffnungen 35 bis 37 gelangen. Wenn in dieser Patentbeschreibung davon die Rede ist, dass die Öffnungen in Kontur und/oder Weite im Wesentlichen der Kontur des Lichtkegels in der jeweiligen Anordnungsebene entsprechen, ist damit gemeint, dass der Anwender bei der Ausführung der Erfindung einen gewissen Spielraum hat. Zum einen ist es denkbar, dass die Öffnungen 35 bis 37 geringfügig größer sind als es entsprechend der Abmessungen des Lichtkegels K in der jeweiligen Anordnungsebene E1 bis E3 zwingend erforderlich ist. Hierdurch lassen sich Fertigungstoleranzen bei LEDs 15 ausgleichen, die zu leicht variierenden Öffnungswinkeln der Lichtkegel K führen können. Außerdem lassen sich so Anordnungstoleranzen zwischen der LED 15 und der Hitzeschilde 27 bis 29 im Sinne einer maximalen Lichtausbeute begegnen.

Ebenso ist es jedoch denkbar, dass die Öffnungen 35 bis 37 enger gehalten werden. In Folge dessen tritt zwar ein Verlust an Lichtleistung durch Abschattung der Randstrahlen des Lichtkegels K ein. Dafür wird jedoch die Wärmeabschirmung verbessert. Auch ist es bekannt, dass LEDs 15 nicht zwingend ihr Licht in Form eines Kreiskegels aussenden, so dass durch Abweichen von der Kegelkontur der LED 15 die Kontur des tatsächlich austretenden Lichtkegels K beeinflusst werden kann. Bei der Verwendung üblicher LEDs 15, die das Licht in Form eines Kreiskegels emittieren, können abweichend von der Kreiskegelkontur dazu benutzt werden, um eine gewünschte Austrittskontur des Lichtkegels K beeinflusst werden.

Beim Studium der Figur 1 wird deutlich, wie die Hitzeschilde zur Wärmeabschirmung der LED 15 dienen. Die Wärmestrahlung ist in Form von Pfeilen W symbolisiert. Sie ist im Wesentlichen senkrecht zur Platine 15 gerichtet. Jeder Hitzeschild 27 bis 29 adsorbiert einen Teil der Wärmestrahlung W. Die Absorption wird dabei anordnungsebenenspezifisch optimiert. Dabei wird jeder Hitzeschild 27 bis 29 durch die jeweilige Öffnung 35 bis 37 gerade in dem Maße geöffnet, welcher für einen optimierten Lichtaustritt notwendig ist. Die übrige Fläche der Hitzeschilde 27 bis 29 in der jeweiligen Anordnungsebene E1 bis E3 steht der Absorption der Wärmestrahlung zur Verfügung.

Es ist vorgesehen, die Hitzeschilde 27 bis 29 aus einem Material mit geringer Wärmeleitfähigkeit herzustellen, damit die Übertragung von Wärmestrahlung von einem Hitzeschild 27 bis 29 zum nächsten Hitzeschild 27 bis 29 möglichst gering ist. Als geeignet erweisen sich hoch temperaturbeständige Kunststoffe, beispielsweise aus der Gruppe flüssigkristalliner Polymere. Besonders bevorzugt sind jedoch mineralische Materialien, insbesondere Schichtminerale, beispielsweise Glimmer. Neben einer geringen Wärmeleitfähigkeit der Materialien ist es weiterhin vorgesehen, dass entlang der Spalte 31 zwischen den Hitzeschilden 27 bis 29 Luft zirkuliert, die ebenfalls der Wärmeabfuhr dient. Letztlich lässt sich die Wärmeabschirmung wesentlich verbessern, indem die der Abdeckung 12 zugewandten Flächen der Hitzeschilde 27 bis 29 mit einer wärmereflektierenden Beschichtung versehen sind.

Zusammenfassend lässt sich als Vorteil aller Ausführungsformen der Erfindung gemäß dieser Beschreibung festhalten, dass im Gegensatz zum Stand der Technik durch die Staffelung mehrerer scheibenartiger Hitzeschilde 27 bis 29 hintereinander in unterschiedlichen Anordnungsebenen E1 bis E3 die vom Garraum emittierte Wärmestrahlung unter Berücksichtigung einer maximierten Lichtausbeute optimiert wird. Dies erreicht die Erfindung dadurch, dass jeder Hitzeschild 27 bis 29 lediglich so weit geöffnet ist, wie es der von der LED 15 ausgehende Lichtkegel K erfordert, wohingegen die übrigen Flächenanteile geschlossen sind.

Die Ausführungsformen der Backofenleuchte 10 in den Figur 2 und 3 sowie 5 und 6 weisen jedoch aufgrund der unterschiedlich ausgestalteten Hitzeschilde 27 bis 29 einige konstruktive Unterschiede auf. Wie bereits vorerwähnt, ist die Wärmebarriere 14 im ersten Ausführungsbeispiel der Figuren 2 und 3 als einstückiges Kunststoffspritzgießteil hergestellt. Die Wahl von Kunststoff als Material zur Ausbildung der Hitzeschilde 27 bis 29 ermöglicht es auf einfache Weise, den ersten Hitzeschild 27 zur Halterung von Reflektoren 25 und Optikelementen 26 auszubilden. Gemäß Figur 3 bildet der erste Hitzeschild 27 eine seine Öffnung 35 umschließende, senkrecht zur LED-Platine gerichtete Ringwand 38 aus. Diese ist in ihrer Höhe derart bemessen, dass sie einen Reflektor 25 sowie ein Optikelement 26 in Form eines Abdeckglases oder einer Linse aufnehmen kann. Um eine sichere Halterung von Reflektor 25 und Optikelement 26 zu gewährleisten, weist die Ringwand 38 an ihrem der Abdeckung 12 zugewandtem Ende einen nach innen gerichteten Halteflansch 39 auf. Da letztlich der Innenumfang des Halteflansches 39 die optisch wirksame Öffnungsweite und Öffnungskontur der Öffnung 35 des ersten Hitzeschildes definiert, ist dieses in Hinblick auf die Maximierung der Lichtausbeute zu berücksichtigen.

Da bei der Verwendung von mineralischen Materialien zur Herstellung der Hitzeschilde 27 bis 29 die Materialeigenschaften bestimmte Konstruktionsänderungen erfordern, wird hierauf im zweiten Ausführungsbeispiel gemäß den Figuren 5 und 6 Rücksicht genommen. Die dortigen Hitzeschilde 27 bis 29 sind jeweils als Einzelelemente ausgebildet. Sie werden jedoch untereinander von einer metallischen Halteklammer 33 befestigt. Um Reflektoren 25 oder Optikelemente 26 beispielsweise in Form einer Linse oder Glasabdeckung der LED 15 vorzuordnen ist deshalb ein separater Optikhalter 34 vorgesehen. Auch dieser verfügt über eine Ringwand 38, innerhalb derer ein Reflektor 25 oder Optikelement 26 angeordnet ist. Diese Ringwand 38 durchstößt die Öffnung 35 des ersten Hitzeschildes 27 und verfügt über einen, im Durchmesser erweiterten Ringflansch 40. Dieser Ringflansch liegt an der der LED 15 zugewandten Unterseite des ersten Hitzeschildes 27 an, so dass auf diese Weise eine positionsgerechte Anordnung und Halterung gewährleistet ist. Zusätzlich kann der Optikhalter 34 über Bügel 41 am Kühlkörper 24 festgelegt sein.

Sowohl die Figuren 2 und 3 wie auch die Figuren 5 und 6 zeigen, dass die Befestigungshülse 11 sowohl das tragende Bauteil für die Abdeckung 12 wie auch für die Wärmebarriere 14 und den daran angeordneten Kühlkörper 24 ist. Reflektor 25 und Optikelement 26 sowie die LED 15 werden ebenfalls über die Kopplung der Bauteile untereinander gehalten. Auf diese Weise wird eine vormontierbare Backofenleuchte 10 geschaffen, die im Montageprozess eines Backofens mit wenigen Handgriffen einfach in die Garraum-Ausnehmung einsetzbar ist.

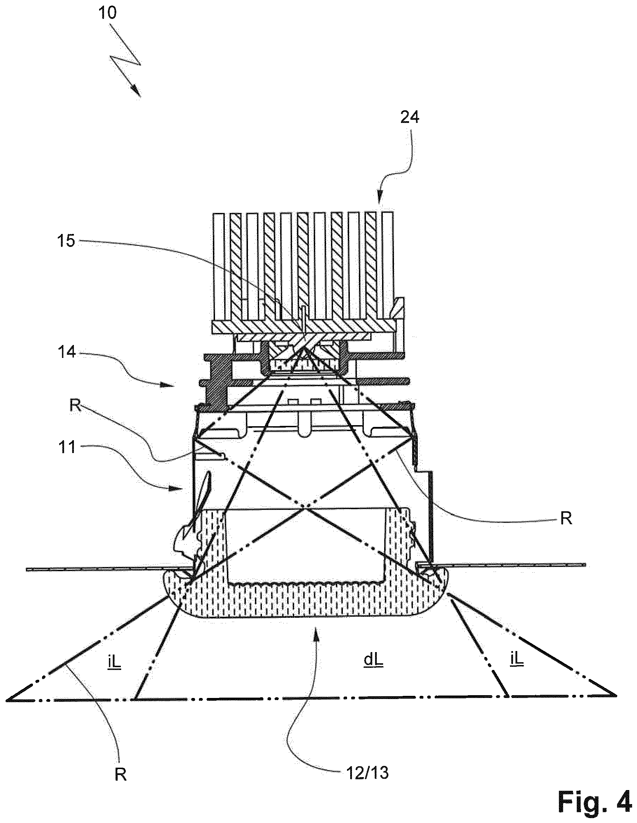

An Hand der Figur 4 ist dargestellt, wie das von der LED 15 emittierte Licht durch die Wärmebarriere 14 und die Abdeckung 12 in den Garraum gelangt. Aufgrund der optimierten Öffnungsweite der Öffnungen 35 bis 37 der Hitzeschilde 27 bis 29 der Wärmebarriere 14 gelangen die Lichtemissionen der LED 15 ungehindert bis in den Bereich der Befestigungshülse 11. Ein Teil der Lichtemission kann ungehindert durch die lichtdurchlässige Abdeckung 12 in Form von direktem Licht dL in den Garraum des Ofens gelangen. Da die Öffnung in der Garraumwandung jedoch kleiner ist als die Ausdehnung des Lichtkegels K in dieser Ebene, werden die Randstrahlen des Lichtkegels K durch eine reflektierende Innenoberfläche der Befestigungshülse 11 umgelenkt und durch die lichtdurchlässige Abdeckung 12 in den Garraum hineingeworfen. So gelangt dieser Anteil als indirektes Licht iL in den Garraum. Dabei ist der Abstand zwischen dem Reflektionsbereich der Befestigungshülse 11 für die Randstrahlen des Lichtkegels K und der Ausnehmung der Garraumwandung so bemessen, dass die Randstrahlen nahe des Ausnehmungsrandes der Ofenwandung die lichtdurchlässige Abdeckung 12 durchtreten. Auf diese Weise ist sichergestellt, dass auch in diesem Bereich keine wesentlichen Lichtverluste zu befürchten sind.

### Bezugszeichenliste

- 10: Backofenleuchte
- 11: Befestigungshülse
- 12: lichtdurchlässige Abdeckung
- 13: Abdeckglas
- 14: Wärmebarriere
- 15: LED
- 16: Außengewinde
- 17: Schaft
- 18: Vorsprünge
- 19: Rastflügel
- 20: Kragen
- 21: erste Haltemittel
- 22: Positionierungsstift
- 23: Positionierungsöffnungen
- 24: Kühlkörper
- 25: Reflektor
- 26: Optikelement
- 27: erster Hitzeschild
- 28: zweiter Hitzeschild
- 29: dritter Hitzeschild
- 30: Abstandelement
- 31: Luftspalt
- 32: zweite Haltemittel
- 33: Halteklammer
- 34: Optikhalter
- 35: Öffnung von 27
- 36: Öffnung von 28
- 37: Öffnung von 29
- 38: Ringwand
- 39: Halteflansch
- 40: Ringflansch
- 41: Bügel

- K: Lichtkegel
- L: Lichtstrahl
- dL: Direktlicht
- iL: indirektes Licht
- W: Wärmestrahlung
- E1 bis E3: Anordnungsebenen

## Patentansprüche

1. Backofenleuchte (10),
- mit einer Befestigungshülse (11), die in einer Ausnehmung einer Garraumwandung verankerbar ist,
- mit einer lichtdurchlässigen Abdeckung (12), welche die Ausnehmung der Garraumwandung verschließt,
- mit einem Leuchtmittel, welches hinter der lichtdurchlässigen Abdeckung (12) angeordnet ist und dessen emittiertes Licht der Ausleuchtung des Garraumes dient, wobei
- das Leuchtmittel von wenigstens einer LED (15) gebildet ist, die das Licht in Form eines Lichtkegels (K) emittiert, wobei
- die LED (15) auf einem Kühlkörper (24) angeordnet ist, der der Abfuhr der Betriebswärme der LED (15) dient, wobei
- eine Wärmebarriere (14) zwischen der Abdeckung (12) und der LED (15) angeordnet ist, die die LED (15) vor einer Gartemperatur schützt, wobei
- der Lichtkegel (K) die Anordnungsebene der Wärmebarriere (14) durchstößt,
**dadurch gekennzeichnet, dass**
- die Wärmebarriere (14) zumindest einen Hitzeschild (27, 28, 29)mit einer Öffnung (35, 36, 37) aufweist, durch welche das Licht der LED (15) in Richtung Abdeckung (12) gelangt
- die Wärmebarriere (14) mehrere, scheibenartige Hitzeschilde (25, 26, 27) umfasst, die zwischen LED (15) und Abdeckung (12) angeordnet sind und einen unterschiedlichen Abstand zur LED (15) aufweisen, wobei die Öffnung (35, 36, 37) eines jeden Hitzeschildes (27, 28, 29) in Form und/oder Weite im Wesentlichen der Kontur des Lichtkegels (K) in der jeweiligen Anordnungsebene (E1, E2, E3) eines jeden Hitzeschildes (27, 28, 29) entspricht.

2. Backofenleuchte nach Anspruch 1, **dadurch gekennzeichnet, dass** die Hitzeschilde (27, 28, 29) untereinander verbunden sind und die Wärmebarriere (14) an ihrem der Abdeckung (12) abgewandten Ende Haltemittel für den Kühlkörper aufweist.

3. Backofenleuchte nach einem der vorhergehenden Ansprüche, **dadurch gekennzeichnet, dass** eine LED-nahe Öffnung (35) eine Halterung für einen Reflektor (25) und/oder eine Optik (26) bildet.

4. Backofenleuchte nach einem der vorhergehenden Ansprüche, **dadurch gekennzeichnet dass** die Befestigungshülse (11) Haltemittel (21) für die Wärmebarriere (14) aufweist.

5. Backofenleuchte nach einem der vorhergehenden Ansprüche, **dadurch gekennzeichnet, dass** jeder Hitzeschild (27, 28, 29) aus einem hoch temperaturbeständigen Kunststoff gebildet ist.

6. Backofenleuchte nach einem der Ansprüche 1 bis 4, **dadurch gekennzeichnet, dass** jeder Hitzeschild (27, 28, 29) aus einem mineralischen Material, insbesondere Glimmer gefertigt ist.

7. Backofenleuchte nach Anspruch 5 oder 6, **dadurch gekennzeichnet, dass** eine der Abdeckung (12) zugewandte Fläche eines Hitzeschildes (27, 28, 29) wärmereflektierend ausgebildet ist.

8. Backofenleuchte nach einem der vorhergehenden Ansprüche, **dadurch gekennzeichnet, dass** die Abdeckung (12), die Befestigungshülse (11), die Wärmebarriere (14), die LED (15) und der Kühlkörper (24) ein vormontiertes Bauteil bilden.

9. Backofenleuchte nach einem der vorhergehenden Ansprüche, **dadurch gekennzeichnet, dass** die Befestigungshülse (11) eine lichtreflektierende Innenoberfläche aufweist.

## Claims

1. Oven light (10),
- having a mounting sleeve (11) which can be anchored in a recess of a cooking cavity wall,
- a light-permeable cover (12) which closes the recess of the cooking cavity wall,
- an illuminating means which is disposed behind the light-permeable cover (12) and the emitted light of which is used to illuminate the cooking cavity, and
- the illuminating means is provided in the form of at least one LED (15) which emits light in the shape of a light cone (K),
and
- the LED (15) is disposed on a cooling element (24) which dissipates the operating heat of the LED (15),
and
- a heat barrier (14) is disposed between the cover (12) and the LED (15) which protects the LED (15) from a cooking temperature,
and
- the light cone (K) penetrates the mounting plane of the heat barrier (14),
**characterised in that**
- the heat barrier (14) has at least one heat shield (27, 28, 29) with an opening (35, 36, 37) through which the light of the LED (15) passes in the direction towards the cover (12),
- the heat barrier (14) comprises several disc-shaped heat shields (25, 26, 27) which are disposed between the LED (15) and cover (12) and spaced at a different distance from the LED (15), and the opening (35, 36, 37) of every heat shield (27, 28, 29) substantially corresponds in terms of shape and/or width to the contour of the light cone (K) in the respective mounting plane (E1, E2, E3) of every heat shield (27, 28, 29).

2. Oven light as claimed in claim 1, **characterised in that** the heat shields (27, 28, 29) are connected to one another and the heat barrier (14) has retaining means for the cooling element on its end facing away from the cover (12).

3. Oven light as claimed in one of the preceding claims, **characterised in that** an opening (35) close to the LED forms a holder for a reflector (25) and/or optics (26).

4. Oven light as claimed in one of the preceding claims, **characterised in that** the mounting sleeve (11) has retaining means (21) for the heat barrier (14).

5. Oven light as claimed in one of the preceding claims, **characterised in that** every heat shield (27, 28, 29) is made from a highly temperature-resistant plastic material.

6. Oven light as claimed in one of claims 1 to 4, **characterised in that** every heat shield (27, 28, 29) is made from a mineral material, in particular mica.

7. Oven light as claimed in claim 5 or 6, **characterised in that** a surface of a heat shield (27, 28, 29) facing the cover (12) is of a heat-reflecting design.

8. Oven light as claimed in one of the preceding claims, **characterised in that** the cover (12), mounting sleeve (11), heat barrier (14), LED (15) and cooling element (24) form a pre-assembled component.

9. Oven light as claimed in one of the preceding claims, **characterised in that** the mounting sleeve (11) has a light-reflecting internal surface.

## Revendications

1. Lampe de four (10),
- avec un manchon de fixation (11) qui peut être ancré dans un évidement d'une paroi d'espace de cuisson,
- avec un couvercle (12) laissant passer la lumière qui ferme l'évidement de la paroi d'espace de cuisson,
- avec un moyen d'éclairage qui est disposé derrière le couvercle (12) laissant passer la lumière et dont la lumière émise sert à l'éclairage de l'espace de cuisson,
- le moyen d'éclairage étant formé d'au moins une LED (15) qui émet la lumière sous forme d'un cône lumineux (K),
- la LED (15) étant disposée sur un corps de refroidissement (24) qui sert à évacuer la chaleur de fonctionnement de la LED (15),
- une barrière thermique (14) étant disposée entre le couvercle (12) et la LED (15), qui protège la LED (15) d'une température de cuisson,
- le cône lumineux (K) traversant le plan d'agencement de la barrière thermique (14),
**caractérisée en ce que**
- la barrière thermique (14) présente au moins un bouclier thermique (27, 28, 29) avec une ouverture (35, 36, 37) à travers laquelle la lumière de la LED (15) est en direction du couvercle (12),
- la barrière thermique (14) comprend plusieurs boucliers thermiques (25, 26, 27) en forme de disque, qui sont disposés entre la LED (15) et le couvercle (12) et présentent un espacement différent par rapport à la LED (15), l'ouverture (35, 36, 37) de chaque bouclier thermique (27, 28, 29) correspondant, en forme et/ou étendue, essentiellement au contour du cône lumineux (K) dans le plan d'agencement (E1, E2, E3) respectif de chaque bouclier thermique (27, 28, 29).

2. Lampe de four selon la revendication 1, **caractérisée en ce que** les boucliers thermiques (27, 28, 29) sont liés entre eux, et **en ce que** la barrière thermique (14) présente au niveau de son extrémité opposée au couvercle (12) des moyens de maintien pour le corps de refroidissement.

3. Lampe de four selon l'une des précédentes revendications, **caractérisée en ce qu'**une ouverture (35) proche de la LED forme un support pour un réflecteur (25) et/ou une optique (26).

4. Lampe de four selon l'une des précédentes revendications, **caractérisée en ce que** le manchon de fixation (11) présente des moyens de maintien (21) pour la barrière thermique (14).

5. Lampe de four selon l'une des précédentes revendications, **caractérisée en ce que** chaque bouclier thermique (27, 28, 29) est formé à partir d'une matière plastique résistante à des températures élevées.

6. Lampe de four selon l'une des revendications 1 à 4, **caractérisée en ce que** chaque bouclier thermique (27, 28, 29) est fabriqué à partir d'une matière minérale, en particulier du mica.

7. Lampe de four selon la revendication 5 ou 6, **caractérisée en ce qu'**une face, orientée vers le couvercle (12), d'un bouclier thermique (27, 28, 29) est réalisée de manière à réfléchir la chaleur.

8. Lampe de four selon l'une des précédentes revendications, **caractérisée en ce que** le couvercle (12), le manchon de fixation (11), le bouclier thermique (14), la LED (15) et le corps de refroidissement (24) forment un composant prémonté.

9. Lampe de four selon l'une des précédentes revendications, **caractérisée en ce que** le manchon de fixation (11) présente une surface intérieure réfléchissant la lumière.
